# EUROPEAN PATENT SPECIFICATION

(11) **EP 2 760 761 B1**
(45) Date of publication and mention of the grant of the patent: **26.06.2019**
(21) Application number: 12772423.5
(22) Date of filing: 28.09.2012
(51) Int. Cl.: B65D 85/804, A47J 31/36

(54) **BEVERAGE CAPSULE WITH SEALING ELEMENT, SYSTEM AND PROCESS FOR PREPARING A BEVERAGE**
GETRÄNKEKAPSEL MIT EINEM DICHTELEMENT, SYSTEM UND VERFAHREN ZUR HERSTELLUNG EINES GETRÄNKES
CAPSULE DE BOISSON AVEC ÉLÉMENT D'ÉTANCHÉITÉ, SYSTÈME ET PROCÉDÉ DE PRÉPARATION D'UNE BOISSON

(30) Priority: 28.09.2011 IT MI20111742; 13.12.2011 WO PCT/IB2011/003021
(43) Date of publication of application: 06.08.2014
(73) Proprietor: Tuttoespresso S.r.l., 20123 Milano (IT)
(72) Inventor: DOGLIONI MAJER, Luca, I-22010 Carate Urio (IT)
(74) Representative: Gislon, Gabriele
(86) International application number: PCT/IB2012/001930
(87) International publication number: WO 2013/046014

(56) References cited:
- EP-A1- 2 151 313
- WO-A1-2009/090201
- WO-A1-2011/010263
- WO-A2-2010/084475

## Description

### Technical field

The present invention relates to a beverage capsule with a sealing element. More particularly, the invention relates to a single use, i.e. a disposable, capsule, or cartridge, for preparing beverage, such as coffee, from a dose of one or more products contained by the capsule, and to a beverage production system comprising a beverage production device (brewing device) for interacting with the capsule.

### Background of the invention

Beverage capsules, especially disposable capsule for preparing coffee, have been known from the 1980's. Beverage capsules comprise a container portion that houses a dose of at least one extractable product, generally ground coffee, but also tea herbal extracts and similar products. The capsules also comprise a portion that interacts with a brewing device to prepare the required beverage. The typical brewing device comprises a boiler, an enclosing member, or receptacle, intended to cooperate with the capsule and a pump or similar means so that the brewing liquid, preferably hot water under pressure, can be supplied to the capsule for the extraction of the beverage from the dose of product contained therein.

In a known beverage preparation process a capsule is fed into the receptacle of the brewing device and is injected with the brewing liquid, typically hot water. The injected hot water passes trough it and extracts the beverage from the ingredient enclosed therein. The beverage exits the capsule to reach a beverage collector and then a cup or a container.

The receptacle encloses at least part of the capsule and cooperates with it in a seal tight engagement in order to allow the hot water to be inserted into the capsule to extract the beverage with no or with limited leakage. Leakage of the brewing liquid may negatively affect the extraction process of the beverage, thus the desired taste and quality of the beverage is not reached.

A known type of capsule has a substantially frusto-conical body and a flange-like rim portion extending from one of the two bases of the capsule. The brewing device comprises means to compress the receptacle against the flange so as to reach the required sealing during the brewing step. Recently, capsules were provided, that are provided with a flange that is located in correspondence of the side of the capsule where the beverage outlet is located; in use, the body of these capsules is housed in the brewing device receptacle and the side of the body opposite to where the flange is located is the side where water is injected. The beverage leaves the capsule from the base where the flange is located. A sealing between the flange and the receptacle is requested to avoid water leaking from the receptacle.

In known brewing devices the seal tight engagement between the capsule and the receptacle is generally obtained by exerting a pressure on the flange-like rim; in other words, the receptacle which is cup-shaped in order to enclose the capsule, is pressed against the flange-like rim of the capsule, along its perimeter.

The problem of ensuring a seal tight engagement between the capsule and the receptacle of the brewing device is particularly felt with the use of the so-called sealed capsules, i.e. those capsules that have a closed outlet for the beverage, the outlet is opened after water fed into the capsule has reached a pressure sufficient for the opening or at least collapsing or total breakage of the thinner sections. Similarly, capsules with an open inlet and a closed or partially closed outlet are affected by the leakage of water: here, as before, a leakage of brewing water , may deeply affect the quality and the aroma of the prepared coffee.

In any case, the problem is general for all types of capsules, i.e. also for those capsules that are not sealed and have openings pre-formed at either the inlet or outlet or both.

In the known brewing device a seal tight engagement between the capsule and the receptacle is generally obtained by exerting a pressure on the flange-like rim of the capsule, in other words, the receptacle which is cup-shaped in order to enclose the capsule, is pressed against part of the capsule in order to create a seal tight line or area. Preferably the lower edge of the receptacle, the so-called pressing portion, is brought in contact with the flange-like rim of the capsule, i.e. a rim extending from the lateral surface of the capsule, along its perimeter.

EP1654966 discloses capsules provided with a resilient material, acting as a gasket or sealing member, which is added in correspondence of the flange-like rim, in order to engage the pressing portion of the receptacle and to interact with the receptacle to provide the desired seal tight engagement.

WO 2009/115474 discloses a brewing device where the pressing portion of the receptacle, i.e. the edge of the receptacle which is brought into contact with the capsule, is provided with irregularities, indentations, and/or gaps. According to the description of WO'474, the gaps are obtained in the edge of the receptacle in order to provide it with a flow directing means to control leakage if the device is operated without inserting a capsule. The problem with this brewing device is that water leaks from the receptacle into the cup where coffee is being collected, which is a negative effect both visually and as far as taste is concerned, not to mention the possible drawback of rapidly filling with excess water the drip tray container.

In fact, a leak of the brewing liquid outside the through the capsule can reduce the pressure inside the capsule and therefore reduce the extraction of the coffee flavours; in addition, water fed to the cup will be unpleasant to see and will dilute the taste of the beverage extracted from the capsule, with a consequent modification of the organoleptic characteristics and quality of the produced beverage.

Known capsules provided with a resilient material, acting as a sealing member, are not suitable to solve the above problem and other solutions have been proposed to ensure a satisfactory seal tight engagement between the capsule and a receptacle provided with irregularities. The sealing portion should ensure that the pressing portion of the receptacle does not remain stuck into the sealing portion at the end of the brewing step, when the used capsule has to be removed from the receptacle (as is often the case with rubber-like sealing elements).

Capsules are already known having one or more projecting elements, made of the same material of the capsule, and extending from its external surface, and in particular form its flange-like rim, in order to provide the sealing engagement with the receptacle. WO2010/084475, in the name of Ethical Coffee Company, describes several embodiments of a capsule having projecting elements on its external surface, and in particular on the upper surface of the flange-like rim.

WO2010/137946, to Sara Lee, discloses a capsule having at least one projection for providing a sealing engagement with the receptacle.

The above projecting elements are produced in one piece with the capsule without the need of adding another material on the capsule during its production, however the desired seal tight engagement of projecting element with the receptacle can not be obtained in a reliable and constant way. WO 2011/010263, EP 2 151 313 and WO 2009/090201 disclose capsules of the prior art.

In view of above, in order to avoid or reduce leakage of the brewing liquid and to ensure the seal tight engagement of the capsule with the receptacle of the brewing device, there is the need of providing a sealing member or a projection intended to cooperate with the pressing edge of the receptacle. At the same time, the correct position of the capsule inside the receptacle must be such as not to impede the extraction of the capsule from the receptacle at the end of the brewing process.

It is an aim of the present invention to solve the above problems and to provide a capsule capable of ensuring a high accuracy in the seal tight engagement with the receptacle, in order to provide a sealing adaptation to different shapes and profiles of the pressing portion of the receptacle, without any problem of insertion or extraction of the capsule into/from the receptacle.

Another aim of the present invention is to provide a capsule which is easy to produce and wherein the sealing element is made integral with the capsule body, without the need of adding resilient sealing material on its external surface for providing sealing compensation for the irregularities provided on the receptacle.

### Summary of the invention

These and other aims are achieved by means of the capsule of the present invention, that is a capsule according to claim 1.

According to another aspect, the ratio between the base of the triangular portion of the sealing element, measured on the upper surface of the flange-like rim, and the width of the lower edge of the receptacle may be comprised within the range 0.8 - 3.0, and preferably is greater than 1.0. The base of the triangular portion can be defined as the distance between the intersections of the two side lines of the triangle with the upper surface of the flange-like rim, where the upper surface is the surface facing the receptacle when the capsule is in use and it is intended to comprises the portion of the flange surface that is covered by and in common with the lateral wall of the capsule. In the present invention, "upper surface" designates the plane of the surface of the flange facing the receptacle when the capsule is in use and extends to the inner side of the lateral wall.

A further object of the invention is a beverage preparing system according to claim 8.

Another object of the invention is a process for preparing a beverage according to claim 14.

At least part of the receptacle enters into contact with at least part of said at least two sides for providing a seal tight engagement with the capsule and due to the aforementioned dimensions, the sealing element of the present capsule undergoes elastic and/or plastic deformation when the receptacle is brought into engagement with the capsule in order to exert a compression force that put in seal tight engagement the capsule with the receptacle.

The sides lying on two straight lines that are incident at one point form a substantially triangular shaped sealing protrusion extending, i.e. protruding, from the upper surface of the flange-like rim.

Triangular cross-section means that the sealing protrusion of the capsule radially cut by a section plane is provided with at least a portion that has a substantially triangular shape, having two sides lying on two incident straight lines. This basic portion can protrude directly from the upper face of the flange-like rim or can be connected to said flange-like rim by a connecting body having another shape, e.g. rectangular.

The capsule has a substantially frustoconical shape with a central vertical axis and the sealing protrusion has a triangular shape in a section view from a plane passing trough the vertical central axis, i.e. a radial section view. In the following description reference will be made to a "sealing protrusion" to indicate that the invention sealing element is protruding from the flange-like rim; the terms sealing element and sealing protrusion are therefore interchangeable.

The elastic and/or plastic deformation of the sealing element, and in particular of the upper portion of the substantially triangular shaped sealing protrusion, allows to obtain the desired seal tight engagement by compensating the irregularities or gaps possibly present on the receptacle.

In other words, the substantially triangular shaped sealing protrusion is intended to be compressed, and elastically and/or plastically deformed, by the lower pressing edge of the receptacle, so that the irregularities of the receptacle can be compensated and leakage of the brewing liquid outside the capsule can be reduced or avoided.

The triangular shape of the sealing protrusion, having two inclined sides defining the claimed angle α, results in an easier compression of the sealing protrusion under the effect of the compression force (pressure) exerted by the pressing portion of the receptacle that is brought in contact with it.

At the same time the substantially triangular shape and the selected angle α value, reduce the amount of force exerted by the user of the brewing device to sealingly close the capsule inside the receptacle.

The point of incidence of the straight lines on which said two sides lie, i.e. the vertex of the triangle, forms a circumference having its center belonging to the vertical central axis of the capsule, so that the sealing protrusion formed by the sides of the triangular sealing protrusion is a circular protrusion extending around the lateral wall of the capsule and having a substantially triangular shape in a radial sectional view. Preferably, the dimension of the sealing protrusion formed by the sides is the same for each radial section about the central axis of the capsule, in other words, the sealing protrusion does not change its shape along the circumference of the capsule.

The sides of the triangular sealing protrusion can be connected one to another in correspondence of the incidence point of the straight lines on which the sides of the triangular sealing protrusion lie, thus the formed sealing protrusion has a triangular shape with a vertex angle having the same dimension of the angle of incidence of the straight lines where the sides lie. Moreover, according to different possible embodiments, the sides may be connected one to the other by means of a rounded line, and/or a straight line, and/or two.or more inclined segments. In this regard it has to be noted that the term "substantially triangular" used to define the shape of the sealing protrusion is used herein to indicate that the cross-sectional shape of the sealing protrusion can be regarded as triangular also in the case that the sides are connected by a rounded line or one or more straight line or segments. A rounded line is generally present and necessary in view of the mould making requirements and piece extraction requirements.

According to the present invention, one of the two sides of the triangle protrudes from the contact point of the lateral wall of the capsule with the upper surface of said flange-like rim. The fact that at least one side protrudes from the lateral wall of the capsule, results in a better centering of the capsule inside the receptacle.

Thus, when the sealing protrusion enters into contact with the lower edge of the receptacle, i.e. the pressing portion, at least one of the sides of the triangular sealing protrusion is in contact with the lower edge of the receptacle thus avoiding any leakage of the brewing liquid.

If one side of the triangular sealing protrusion protrudes from the later wall of the capsule, this arrangement provides a stiffening of the sealing protrusion, so that under the effect of the compression force, the lateral wall is not subjected to radial movement or deformation that could negatively affect the seal engagement between the sealing protrusion and the receptacle.

The angle formed between the at least one side protruding from the lateral wall of the capsule and the lateral wall of the capsule is an acute angle.

As already mentioned above, the height of the incidence point of the straight lines on which lie the two sides of the triangular sealing protrusion, measured in a radial cross sectional view from the upper surface of the flange-like rim is greater than 0.5 mm, generally between 0.5 and 3.0 mm and preferably in the range of 0.6 mm to 2.6 mm. According to preferred embodiments the height is within the range of 0.6 to 2.0, and most preferably 0.8 to 1.5.

The angle α at the vertex of the triangular portion, i.e. the angle formed at the incidence point of the straight lines on which lie the two sides of the triangular sealing protrusion, is preferably comprised in the range 53° to 80°, preferably within 55° to 65° and most preferably the angle is of 60°, corresponding to a substantially equilateral triangular shape of the sealing protrusion.

In the shown exemplary embodiment, the height is 1 mm and the sealing element is a protrusion having at least a portion that has a cross section corresponding to an equilateral triangular shape, i.e. the angle formed by the incident straight lines on which lie the sides is of 60°.

As mentioned, the capsule of the invention is to be used in a system where a receptacle houses the capsule during the step of producing the required beverage; in this condition the axis of the capsule and the axis of the receptacle are more or less coaxial. To compress the sealing protrusion, the radial distance (i.e. the radius R) of the sealing protrusion from the central axis of the capsule is substantially equal to the radius of the receptacle from its central axis. The ratio between the base of the triangular portion of the sealing protrusion, measured on the upper surface of the flange-like rim, and the width of the lower edge of said receptacle, i.e. the pressing portion, may be in the range 0.8 - 3.0, preferably within the range 1.0 - 2.3, and more preferably in the range 1.2 - 1.8.

These values of the ratio between the dimension of the base of the triangle-shaped sealing protrusion and the width of the lower edge of the receptacle allows to improve the seal tight engagement between them during the beverage preparation process.

In particular, the receptacle can be brought in a substantially continuous contact with at least a portion of the two sides forming the triangular shape, i.e. the lower edge of the receptacle, even when it is provided with irregularities, can contact at least one of the two sides, on the left side or the right side, or both of them, with respect to the vertex of the triangular shape (the point of incidence of the straight lines where the sides lie), thus providing the deformation of the sealing protrusion and the desired seal tight engagement.

Advantageously, the claimed ratio results in the centering of the capsule on the pressing portion of the receptacle being improved and substantially automatically carried out by the combination of shape, angle and ratio.

Another aspect of the present invention provides a beverage preparation system of the type comprising a capsule of the type described herein, and a beverage production device comprising a receptacle for enclosing at least part of said capsule, wherein the receptacle enters into contact with at least part of said at least two sides of the triangular sealing protrusion of the capsule for providing a seal tight engagement with the capsule. As mentioned above, the substantially triangular shape - in a cross sectional view - of the sealing protrusion results in the correct interaction with the receptacle of the brewing device, and in particular with its lower - pressing - edge, even if the latter is provided with some irregularities due to a specific design or to wear.

The capsule provided with the sealing element of the present invention can be produced in a knowm way, namely by injection moulding or by thermoforming. It is a further advantage of the invention that the claimed capsule and sealing element are suitable to be thermoformed.

### Brief Description of the Drawings

Further advantages and features of the present invention will be more apparent from the description below, provided with reference to the accompanying drawings, purely by way of a non-limiting example, wherein:
- Figure 1 is perspective view of the capsule according to the present invention;
- Figure 2 is a radial sectional view from a plane passing trough the central axis of the capsule according to the present invention;
- Figure 3 is an enlarged sectional view of the sealing protrusion of the capsule according to the present invention according the area K of figure 2;
- Figures 3a is an enlarged view of figure 3;
- Figure 4 is an enlarged sectional view of the outlet means of the capsule according to the present invention according the area J of figure 2;
- Figure 5 is a sectional view of the body of another capsule which is not part of the invention, suitable for thermoforming process;
- Figure 6 is an enlarged view of the sealing element of the capsule of fig. 5.

### Detailed Description

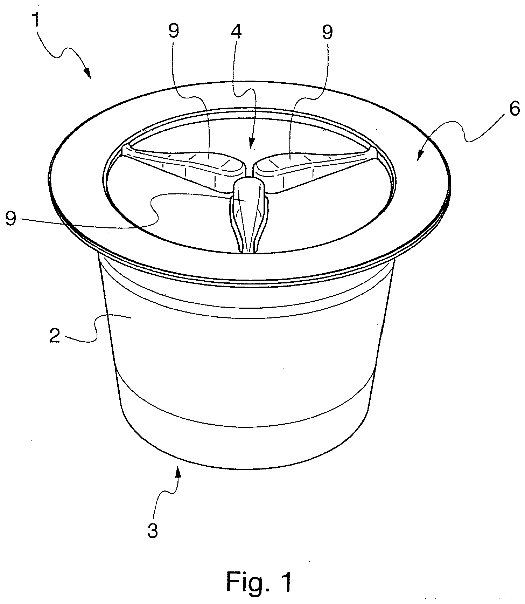

Figures 1 - 4 show an embodiment of the capsule 1 according to an exemplary embodiment of the present invention, for the preparation of a beverage, such as coffee, tea, hot and cold drinks, or any other comestible liquids, from a dose of an extractable product, either liquid or solid, enclosed inside the capsule. Preferably the dose of product comprise a powder product, such as coffee powder, which is brewed by means of brewing liquid, preferably hot water under pressure, that is injected into the capsule for obtaining the desired beverage.

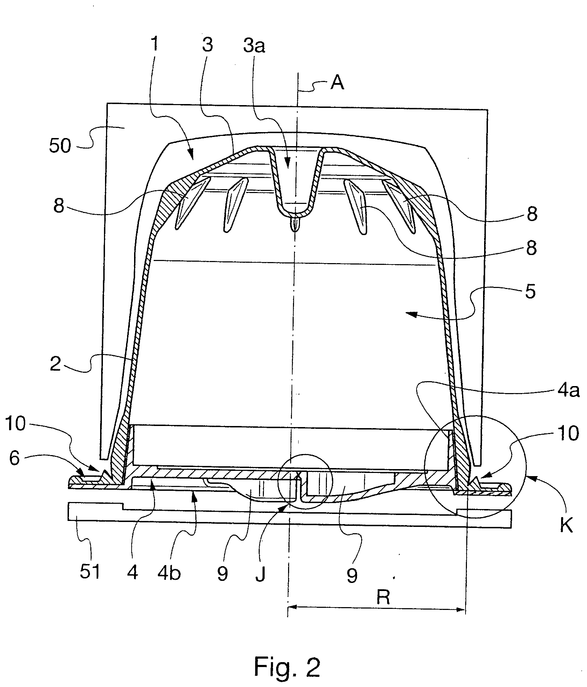

The capsule according to the invention is part of a system and it is used into a beverage preparation device (i.e. a brewing device) provided with an enclosing element, or receptacle 50 (fig. 2), intended to house at least part of the capsule during the beverage preparation process. In other words the capsule 1 is inserted at least in part into the receptacle 50 that is shaped in correspondent manner with respect to the capsule in order to allow its insertion/extraction into/from the receptacle, respectively at the start and at the end of the beverage preparation process. The receptacle 50 cooperates with a support member 51 that supports the capsule from the other side of the flange rim 6 when is the capsule is inserted into the receptacle. Support member 51 is usually a fixed member, while receptacle 50 is movable. In use, receptacle 50 is moved towards support 51 and the flange rim is compressed between receptacle 50 and support 51. The brewing device is further provided with means (not known) for feeding the brewing liquid, preferably hot water under pressure, inside the capsule.

During the beverage preparation, the capsule 1 of exemplary embodiment is located between receptacle 50 and support element 51 of the beverage preparation device, which further comprises known means for controlling the relative movement between the receptacle 50 and the support member 51, in order to enclose the capsule between them. The receptacle 50 exerts a pressure on at least part of the capsule, and preferably on its flange-like rim, in order to obtain the seal tight engagement.

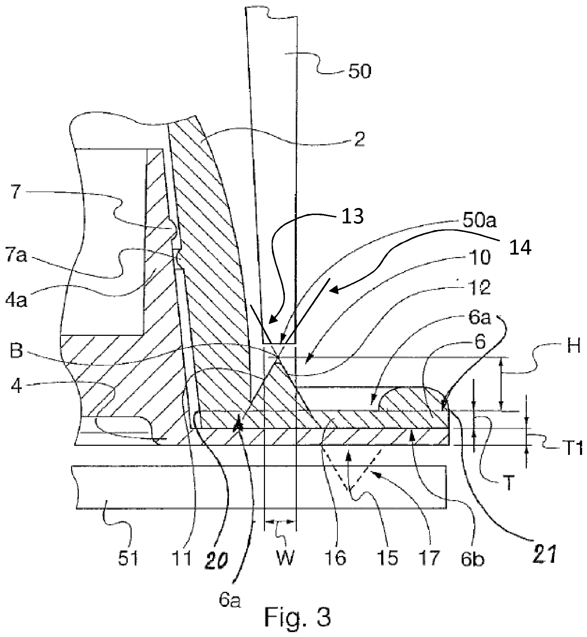

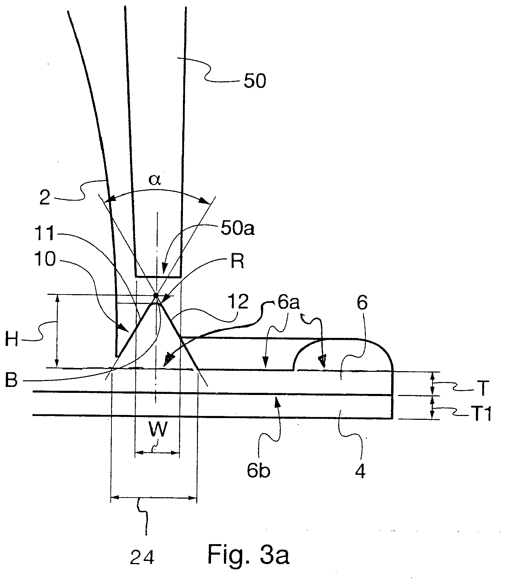

As shown in the figures 1 - 3, 3a, the capsule 1 according to the invention comprises a lateral wall 2, an upper wall 3 and a lower wall 4 forming a hollow body 5 where a dose of product is located.

The capsule has substantially a cup-shape, or frustoconical shape, with a central axis (A), in other words, the lateral wall 2 is not parallel to the central axis (A) and the hollow body 5 is closed by a lower wall 4, which is substantially flat, and an upper wall 3. In the shown embodiment, the radius (R), see figure 2, of the capsule body 5, measured between the central axis A and the external surface of the lateral wall 4 is of 15 mm.

In the exemplary embodiment shown in the figures, the lower wall 4 is a separate element, similar to a lid, which is connected to the lower portion of the capsule body 5, in order to close the capsule and house the ingredient. Lower wall 4 has a protruding portion 4a (see figure 3) that is fitted inside the capsule and is provided with constrain means, that are shaped in the form of a circumferential ridge 7, provided on the external surface of the protruding portion 4a, that cooperate with correspondent constrain means in the form of a circumferential ridge 7a provided on the internal surface of the lateral wall 2 of the capsule, in order to fix the lower wall 4 to the capsule.

Any other suitable constraint means of the lower wall 4 to the capsule body 5 can be used, and in other possible embodiments the lower wall 4 may be produced in one piece with the capsule.

Moreover, the lower wall may be produced in different material with respect to the capsule material, for example, the lower wall 4 may be a foil or a porous or non porous membrane, as already known in other capsules for the production of beverage, this foil or membrane will be pierced in use of the capsule.

The capsule 1 according to the present invention is provided with a flange-like rim 6 laterally extending from the capsule, in particular the flange-like rim circumferentially extends from the lower portion of the lateral wall 2 of the capsule, forming a perimetral protrusion of the capsule. Flange 6 has thickness T and wall, or lid, 4 has thickness T1. Preferably the flange-like rim 6 is substantially flat, i.e. its upper and lower surface 6a and 6b are flat. In other words, the flange-like rim 6 is lying on a plane that is perpendicular with respect to the central axis A of the capsule.

In the shown embodiment, the upper wall 3 of the capsule is provided with central recess 3a to facilitate the injection of the brewing liquid inside the capsule. Moreover, on the internal and/or external surface of upper wall 3 there are provided a plurality of protruding elements 8 arranged substantially in a vertical manner, i.e. along planes passing trough the central axis (A) of the capsule, so as to stiffen the upper portion of the capsule, thus avoiding undesired deformation when the capsule is pierced by of piercing means of the brewing device arranged inside the receptacle 50 (not shown in the attached figures).

The capsule is preferably produced in a plastic material approved for the use of comestibles product, for example polypropylene, polyethylene, PLA (polylactic acid), and polystyrene (e.g. High Impact Polystyrene Sheeting) that is also resistant to high temperature and pressure of the brewing liquid injected in its inside during the beverage preparation process. The plastic material is selected according to the production process of the capsule, e.g. injection moulding and thermoforming.

The capsule is further provided with means that will eventually allow the injection and the extraction of the brewing liquid. According to known embodiments said inlet and outlet means may comprise one or more opening on the surface of the capsule, self-perforating elements that are broken under mechanical and/or pressure force acting on the capsule, or one or more holes that are produced by piercing means of the brewing device when the capsule is in use. In the shown embodiment, the capsule is provided with outlet means in the form of a plurality of self-perforating elements 9 on the lower wall 4.

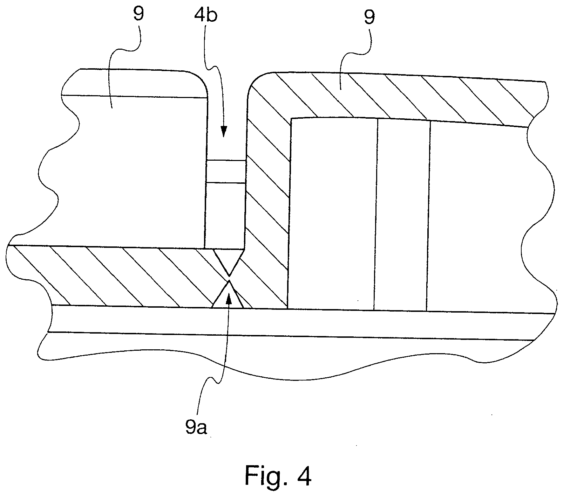

The self-perforating elements 9 comprise a plurality of element protruding at least in part from the lower surface 4b of bottom wall 4, that are breakable under the action of the mechanical force exerted by the brewing device and/or the force exerted by the water fed into the capsule. In particular, as shown in the enlarged view of figure 4, the elements 9 are defined by a portion of reduced thickness 9a of lower wall 4 that can be broken when the part of the element that protrudes from the lower surface 4b of the lower wall 4, is pressed against support member 51 of the brewing device. A hinge ensures that elements 9 can oscillate and open without completely breaking away from wall 4.

This type of self-perforating element is described in detail in the patent application WO2007/063411, in the name of the same Applicant.

Another type of outlet means has a corresponding plurality of elements, but the reduced thickness periphery of the element is replaced by a groove where the wall 4b is not present, i.e. with a pre-cut area, the hinge portion being still present; additionally, in this embodiment the elements can protrude both outwardly and inwardly with respect to wall 4.

The above mentioned outlet elements can be opened under the action of the mechanical force resulting from compression of the capsule by receptacle 50 against plate 50, or by means of the pressure built by the brewing liquid, or as a result of the combined action of the brewing liquid pressure with the mechanical force exerted by the receptacle. Other types of outlet means can be provided, i.e. the extraction of the beverage from the capsule can be obtained, for example, by perforating the capsule by suitable perforating means of the brewing device; in another embodiment, the outlet means is a watersoluble membrane.

The inlet means of the capsule of the exemplary embodiment comprise one or more holes provided by perforating means of the brewing device, in other words, when the capsule is housed inside the receptacle 50, perforating means protruding inside the latter produces one or more holes into the capsule surface for allowing the injection of the brewing liquid.

Also in this case, it has to be noted that any suitable water inlet means can be used without departing from the scope of protection of the present invention. As an example, a combination of a foil and perforating means fixed to the capsule, as disclosed in PCT/IT2004/000503, could be used.Capsule 1 further comprises at least one sealing protrusion 10 for ensuring the desired seal-tight engagement with at least a portion of the receptacle 50 of the brewing device.

In the shown exemplary embodiment, the sealing protrusion 10 is provided on the flange-like rim 6 of the capsule, i.e. the portion of the capsule designed to be brought in contact with the receptacle 50, and in particular with the lower edge 50a of the receptacle, i.e. the pressing portion of the receptacle, for providing the sealing engagement.

As shown in the sectional view of figures 2, 3 and 3a, the receptacle 50 of the brewing device is substantially cup-shaped for allowing the insertion/extraction of the capsule in/from it, and is provided with a substantially circular lower edge 50a intended to cooperate as a pressing portion with the capsule, and in particular with the sealing protrusion 10 arranged on the flange-like rim 6 to provide a seal tight area.

The at least one sealing protrusion 10 comprises a portion having a substantially triangular cross-section with two sides 11, 12 lying on, i.e. defined by, two straight lines 13 and 14 (shown in figures 3 and 3a as dashed straight lines on which lie the sides 11 and 12) that are incident one to the other in one point B.

More in detail, in a cross sectional view, the sealing protrusion of the capsule is formed by two sides 11, 12 that lie on two straight lines that are incident at point B, forming a substantially triangular shaped sealing protrusion extending from the upper surface 6a of the flange-like rim 6. In the shown embodiment, the cross sectional view is taken from a radial plane passing trough the central axis A, see figures 2, 3 and 3a. As shown in the figures, straight lines defining sides 11 and 12 of the sealing triangle intersect flange 6, namely they intersect the upper surface 6a of the flange 6. As previously mentioned, the wording "upper surface" of flange-like rim 6 is intended to define the plane of the surface of the flange (facing the receptacle when the capsule is in use) that extends to the inner side 20 of the lateral wall of the capsule body and to the outer end 21 of the flange. Preferably, the lines defining sides 11 and 12 are also intersecting the lower surface 6b of the flange 6 (fig. 3a), i.e. the triangle is located on the flange and is shaped so that the lines defining the sides 11 and 12 of the triangle intersect at least the plane of upper surface 6a and preferably also the lower surface 6b of flange 6.

The radial distance (i.e. the radius R) of the sealing protrusion from the central axis of the capsule is substantially equal to the radius of the receptacle from its central axis so as to provide a compression of the receptacle 50 onto sealing triangle protrusion 10 when the capsule is in use.The angle of incidence α formed by lines 13 and 14 on which lie sides 11, 12 is the angle of the upper vertex of the triangle defined by sides 11 and 12 and by surface 6b; angle α is comprised in the range 45° - 120°. It has to be noted that the angle α substantially correspond to the upper vertex angle of the substantially triangular shaped protrusion formed by the two sides 11, 12.

Preferably, the angle α is comprised in the range 53° to 80°, more preferably within 55° to 65° and most preferably the angle is 60°. In the shown exemplary embodiment the angle α is 60°, thus forming a sealing protrusion 10 having a substantially equilateral triangle cross-section.

In other words, the two sides 11, 12 form a sealing protrusion, extending from the upper surface 6a of the flange-like rim 6, having a substantially triangular shape viewed in a cross sectional view. As already mentioned above, the cross-section is taken from a plane passing trough the central axis A of the capsule, and is a radial cross sectional view.

In fact, the point of incidence B of lines 13 and 14 forms a circumference having its center belonging to said central axis A of the capsule, so that the sealing protrusion formed by the sides 11, 12 is a circular protrusion extending around the lateral wall of the capsule.

Preferably the dimension of the sealing protrusion formed by the sides 11, 12 are the same for each radial section about the central axis A of the capsule, in other words, the sealing protrusion 10 does not change its shape along the circumference of the capsule.

The triangular portion of the sealing protrusion 10 has a base 24 that is lying on upper surface 6b of the flange-like rim 6 (see figure 3a) and is defined by the two intersection points of lines 13 and 14 with surface 6b; the lower edge 51 of the receptacle 50, i.e. the pressing edge of receptacle 50 has a width W that is the width of the portion of the receptacle that comes into contact with the flange of the capsule. The ratio Base/Width between base 24 as measured on said upper surface 6a, and width W of the lower edge 51 of the receptacle 50 may be comprised in the range 0.8 - 3.0, and preferably is greater than 1.0. More preferably the ratio Base/Width may be within the range 1.0 - 2.3, and more preferably in the range 1.2 - 1.8.

The combination of the features relevant to height, angle α and shape (as defined by the triangle sides intersecting flange 6) result in the previously discussed self-adjustment of the sealing element with respect to lower edge (or pressing surface) 50a of receptacle 50; the lower edge will always be in contact with sealing triangle 10 at a position that can be the internal side or the external side or the top of the triangle. Usually the contact is at all of said positions, at different parts of the sealing triangle protrusion 10: the non perfect coaxiality of the capsule axis with the axis of the receptacle 50 is compensated by the claimed sealing features that allow the lower edge to compress the triangular protrusion to a sealing effect.

The triangular sealing protrusion is preferably produced in one piece with capsule 1, and preferably is made of the same material of the capsule. In further possible embodiments the sides 11, 12, of the substantially triangular shaped sealing protrusion 10 can be made of a different material with respect to the material of the capsule co-moulded or as a separate piece, subsequently constrained to the capsule.

Moreover, the material of the sealing protrusion can be elastically and/or plastically deformable when it contacts the lower edge 50a of the receptacle 50, when the latter is pressed against the capsule to exert a pressure that provides the seal engagement. Additionally, it should be noticed that the claimed protrusion makes it possible to have a good sealing by using only one protrusion on the upper surface 6a of flange 6, contrary to known devices using multiple protrusions.

As shown in fig. 3 and 3a, part of the protrusion is a portion of lower wall 4 referred to as 15, i.e. lower wall 4 has a portion 15 that is contacted and secured with the flange portion extending from lateral wall 2 to provide a double-layer flange; the lower protrusion 17 is shown in dashed lines in fig. 3, extending from portion 15 of lower wall 4. Thus, in a possible further embodiment, the capsule has two triangular protrusions 10 and 17, extending from opposite sides of the rim of the capsules, the two protrusions may have different shapes and heights.

It has to be understood that the term "substantially triangular cross section" means that the triangular shape having two sides 11, 12 may not be a complete triangular shape, as shown in the sectional view of figures 2 and 3.

In fact, as shown in the figures, and in particular in the enlarged sectional view of figure 3a, one of sides 11, 12 protrudes from the lateral wall 2 of the capsule, and the other side protrudes from the upper surface 6a of flange-like rim 6 of the capsule.

In the embodiment shown in figures 2, 3 and 3a, the left lateral side 11 protrudes from the lateral wall 2 of the capsule and the right side 12 protrudes from the flange-like rim 6, the angle α of incidence of the lines 13 and 14, and of sides 11 and 12, of the triangular sealing protrusion is 60°.

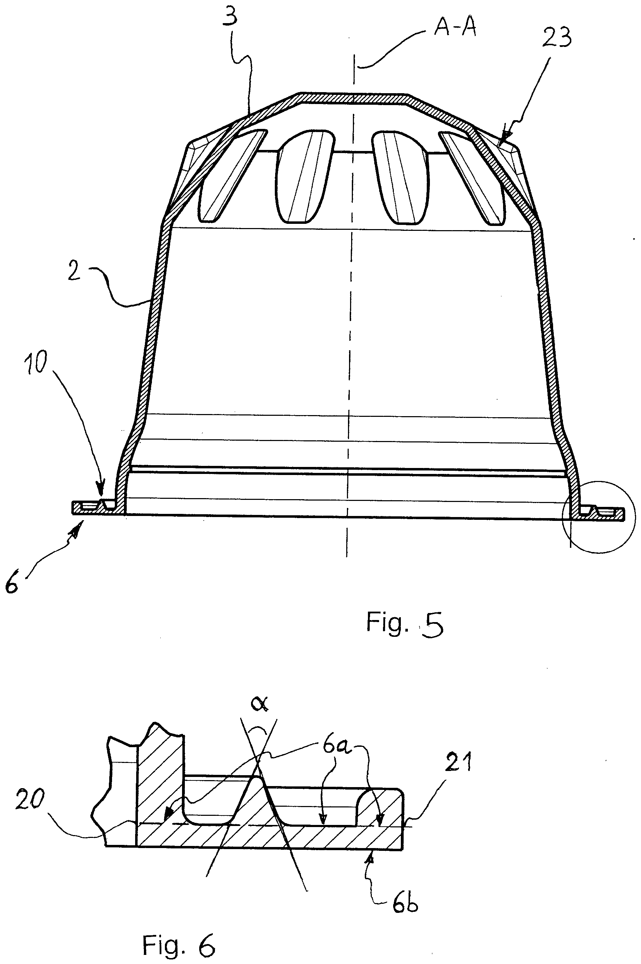

The two sides 11, 12 form with surface 6a substantially an equilateral triangle that is not completely visible due to the fact that the left side 11 protrudes from the lateral wall 2 of the capsule. Moreover, it has to be noted that in figures 2 the sides 11, 12 are connected one to another by means of a rounded line (r). In figures 5 and 6, which represent a capsule which is not part of the invention, the side 11 extends from the free portion 16 of the upper surface 6a, e.g. from the contact point of the lateral wall 2 of the capsule with the upper surface 6a or further away from wall 2, where a complete triangular shape of the sealing protrusion formed by the sides 11, 12 can be visible in a radial sectional view. The capsule of figures 5 and 6 is for thermoforming process. Same features have been identified with the same reference numbers as in figures 1-4. The capsule of fig. 5 is provided with reinforcing elements 22 on inlet wall 3; reinforcing elements 22 are in the form of recesses obtained in the both lateral wall 2 and inlet wall 3. The recesses result in a plurality of additional "connecting walls" 23 that are inclined with respect to both wall 2 and wall 3; these types of reinforcing elements for capsules are disclosed in greater details in co-pending application EP 12005214.7 filed by the applicant on 16.07.2012. Angle α for the embodiment of fig. 5 and 6 is 45°.

Fig, 5 shows a capsule that has constant thickness of the capsule body, the scope of the application includes also capsule bodies where the thickness of the walls is not constant, especially in case the capsule is obtained by thermoforming.

The sides 11, 12 can be connected one to another in correspondence of the incidence point B of the straight lines on which the sides 11, 12 lie, thus the formed sealing protrusion has a triangular shape with a vertex angle having the same dimension and shape of the angle α of incidence of the straight lines where the sides 11, 12 lie.

As depicted in the attached figures, the sides 11, 12 are connected one to the other by a rounded line having a radius r of 0.1, thus the triangular shape is provided with a rounded vertex in its upper portion.

As not shown in the figures, the sides 11, 12 may be connected one to the other by means of straight line, and/or by two or more inclined segments. In this case the upper portion of the formed sealing protrusion has a truncated vertex. It has to be understood that in the present disclosure the term "substantially triangular cross section" of the sealing protrusion it is used to comprise the embodiments in which the upper portion of the sides are connected by means of one or more straight lines or segments, forming, for example, a trapezoidal shape in the case the two sides 11 and 12 are connected by a straight line parallel to the upper surface 6a of the flange-like rim 6.

In a sectional view, see figures 2, 3 and 3a, the height H of the incidence point B of the straight lines on which lie the two sides 11, 12, measured from the upper surface 6a of the flange-like rim 6 is greater than 0.5 mm, and preferably within the range of 0.6 mm to 2.6 mm. More preferably the height H is within the range of 0.6 to 2.0, and preferably 0.8 to 1.5.

In the attached figures the height H is 1 mm.

Moreover, the incidence point B of the straight lines on which lie the two sides 11, 12, in a radial sectional view with respect to said central axis A, falls inside the projection of the width W of the lower edge 50a of said receptacle 50, see figures 3 and 3a.

It has to be noted that in the capsule shown in the figures, the height H of the incidence point B of the straight lines 13 and 14, on which lie sides 11, 12, corresponds to the bisecting line (bisector) of the angle α.

The present invention further relates to a beverage preparation system according to any of claims 8-13.

In operation the capsule 1 is inserted into the receptacle 50, that is substantially cup shaped and is provided with a lower edge 50a acting as the pressing portion of the receptacle and intended to be brought in contact with the flange-like rim 6 of the capsule, and in particular with sealing protrusion 10.

Receptacle 50 cooperates with a lower support member 51, and the brewing device is provided with known means allowing the displacement of the receptacle in order to enclose the capsule 1 between the receptacle 50 and the lower support member 51. The lower edge 50a of the receptacle is thus pressed against the flange-like rim 6 and at least part of the sides 11, 12 enter into contact with it in order to provide the desired seal tight engagement.

The sealing protrusion 10, formed by sides 11, 12 is partially deformed, elastically and/or plastically, in order to ensure the desired seal tight engagement, avoiding any leakage of the brewing liquid that is injected into the capsule.

It has to be noted that the substantially triangular shape of the sealing protrusion facilitate its deformation under the pressure exerted by the receptacle, without the need of an high force applied by the user of the brewing device for the displacement of the receptacle.

Furthermore, as already mentioned above, the fact that at least one side protrudes from the later wall of the capsule, allows to improve the centering of the capsule inside the receptacle. Centering is in any case obtained because of the above disclosed ratio between the base of the protrusion and the width of the lower edge 50a.

Thus, when the sealing protrusion enters into contact with the lower edge 50a of the receptacle 50, at least part of at least one of sides 11, 12, respectively on the right side of the vertex B and on left side of the vertex B is in contact with the lower edge of the receptacle thus avoiding any leakage of the brewing liquid. In fact, it was found that the contact can occur in part on side 11 and in the remaining part on side 12ensuring in any case a substantially complete contact of the lower edge 50a with sealing protrusion 10.

In view of the above, it is clear that the shape of the sealing protrusion of the capsule according to the present invention is able to compensate any irregularities provided on the receptacle, and in particular in correspondence of its lower edge that is brought in contact with the sealing protrusion.

The compression of the substantially triangular shape of the sealing protrusion allow to effective seal the irregularities of the lower edge of the receptacle allowing the perfect interaction between them in order to obtain the desired seal tight engagement.

## Claims

1. A capsule (1) for the preparation of a beverage from a brewing device that comprises a receptacle (50) for enclosing at least part of said capsule, said capsule comprising a lateral wall (2), an upper, inlet, wall (3) and a lower, outlet, wall (4) forming a hollow body (5) where a product is contained, a flange-like rim (6) laterally extending from said capsule, at least one sealing protrusion (10) located on an upper surface (6a) of said flange-like rim for providing a sealing engagement with said receptacle (50) when in use in said brewing device, said capsule body being substantially frusto-conical and having a central vertical axis (A), said sealing protrusion comprising a portion having a substantially triangular cross-section with two sides (11, 12) lying on two straight lines that extend from and intersect said upper surface (6a) of the flange-like rim (6) and are incident one to the other in one point (B) to define an angle (α); said incidence point (B) having a height (H), wherein in a radial sectional view, said height (H) is the vertical distance of said incidence point (B) measured from the upper surface (6a) of said flange-like rim (6); wherein one of said two sides (11, 12) protrudes from the contact point of the lateral wall (2) of the capsule with the upper surface (6a) of said flange-like rim (6), wherein the point of incidence (B), in a radial sectional view with respect to the central vertical axis (A) of the capsule, forms a circumference having its center belonging to said central axis (A), said capsule being **characterised in that**:
said angle (α) is comprised in the range 45°-120°;
said height (H) is greater than 0.5mm and preferably within the range of 0.6mm to 2.6mm;
said height (H) corresponds to the bisecting line of said angle (α).

2. A capsule according to claim 1, wherein said angle (α) is within the range of 53° to 80°, preferably within 55° to 65° and most preferably 60°.

3. A capsule according to claim 1 or 2, wherein said height (H) is within the range of 0.6 to 2.0 mm, preferably 0.8 to 1.5 mm.

4. A capsule according to any of the preceding claims, wherein said triangle is an equilateral triangle.

5. A capsule according to any previous claim, wherein said at least two sides (11, 12) are connected one to the other by means of a rounded line, and/or a straight line, and/or two or more inclined segments.

6. A capsule according to any previous claim, wherein the lower portion of the lateral wall (2) of the capsule is substantially vertical.

7. A capsule according to any previous claim, wherein said sealing protrusion extends from both the upper side and a lower side of said flange-like rim (6).

8. A beverage preparation system, comprising a capsule (1) according to any of the previous claims, and a brewing device including a receptacle (50) for enclosing at least part of said capsule, wherein said receptacle (50) has a lower edge (50a) that enters into contact with said substantially triangular portion of said sealing protrusion (10), for providing a seal tight engagement with the capsule (1) during said beverage preparation.

9. A beverage preparation system according to claim 8, wherein the ratio between the base (24) of said triangular portion of the sealing protrusion (10) measured on said upper surface (6a) of the flange-like rim (6) and the width (W) of the lower edge (50a) of said receptacle (50) is comprised in the range 0.8 - 3.0 and preferably in the range 1.0 - 2.3, most preferably in the range 1.2 - 1.8.

10. A beverage preparation system according to claim 8 or 9, wherein said point of incidence (B) of said straight lines on which lie said two sides (11, 12) falls inside the projection of the width (W) of the lower edge (50a) of said receptacle (50), which is intended to enter into contact with at least part of said two sides (11, 12) for providing a seal tight engagement with the capsule (1).

11. A beverage preparation system according to any claim 8 to 10, wherein, when in use, the said lower edge (50a) compresses part of said inner side (11) and part of said outer side (12) of said triangular sealing protrusion (10).

12. A beverage preparation system according to any claim 8 to 11, wherein said lower edge (50a) is provided with indentations or gaps.

13. A beverage preparation system according to any claim 8 or 12, wherein said lower edge (50a) and said sealing protrusion are substantially coaxial circumferences.

14. A process for preparing a beverage in a beverage system according to any claim 8 to 13, **characterized in that** said lower edge of said receptacle (50) is compressed into contact with said part of said inner side (11) and part of said outer side (12) of said triangular sealing protrusion (10), for providing a seal tight engagement with the capsule (1) during said beverage preparation.

## Patentansprüche

1. Kapsel (1) zur Zubereitung eines Getränks mittels einer Brühvorrichtung, welche einen Behälter (50) zum Umschließen mindestens eines Teils der Kapsel umfasst, wobei die Kapsel eine Seitenwand (2), eine obere Einlasswand (3) und eine untere Auslasswand (4) umfasst, welche einen ein Produkt enthaltenden Hohlkörper (5) ausbilden, sowie einen flanschartigen Rand (6), welcher sich seitlich von der Kapsel erstreckt, mindestens einen Dichtungsvorsprung (10) an einer oberen Fläche (6a) des flanschartigen Randes zur Bereitstellung eines abdichtenden Eingriffs mit dem Behälter (50) bei Verwendung in der Brühlvorrichtung, wobei der Kapselkörper im Wesentlichen kegelstumpfförmig ist und eine zentrale Vertikalachse (A) aufweist, wobei der Dichtungsvorsprung einen Abschnitt mit einem im Wesentlichen dreieckigen Querschnitt umfasst mit zwei Seiten (11, 12), die auf zwei geraden, sich von der oberen Fläche (6a) des flanschartigen Randes (6) erstreckenden und diese schneidenden Linien liegen, und die in einem Punkt (B) aufeinander fallen, um einen Winkel (a) zu definieren; wobei der Auftreffpunkt (B) eine Höhe (H) aufweist, wobei in einer radialen Schnittansicht die Höhe (H) der von der oberen Fläche (6a) des flanschartigen Randes (6) gemessene, vertikale Abstand des Auftreffpunkts (B) ist; wobei eine der beiden Seiten (11, 12) vom Kontaktpunkt der Seitenwand (2) der Kapsel mit der oberen Fläche (6a) des flanschartigen Randes (6) vorsteht, wobei der Auftreffpunkt (B) in einer radialen Schnittansicht in Bezug auf die zentrale Vertikalachse (A) der Kapsel einen Umkreis ausbildet, dessen Mittelpunkt zur zentralen Achse (A) gehört, wobei die Kapsel **dadurch gekennzeichnet ist, dass**
der Winkel (a) im Bereich von 45° - 120° liegt;
die Höhe (H) größer als 0,5 mm ist und vorzugsweise im Bereich von 0,6 mm bis 2,6 mm liegt;
die Höhe (H) der Winkelhalbierenden des Winkels (a) entspricht.

2. Kapsel gemäß Anspruch 1, wobei der Winkel (a) im Bereich von 53° bis 80° liegt, vorzugsweise im Bereich von 55° bis 65° und am meisten bevorzugt bei 60°.

3. Kapsel gemäß Anspruch 1 oder 2, wobei die Höhe (H) im Bereich von 0,6 bis 2,0 mm liegt, vorzugsweise bei 0,8 bis 1,5 mm.

4. Kapsel gemäß einem der vorhergehenden Ansprüche, wobei das Dreieck ein gleichseitiges Dreieck ist.

5. Kapsel gemäß einem der vorhergehenden Ansprüche, wobei die mindestens zwei Seiten (11, 12) mittels einer abgerundeten Linie und/oder einer geraden Linie und/oder zwei oder mehr geneigten Segmenten miteinander verbunden sind.

6. Kapsel gemäß einem der vorhergehenden Ansprüche, wobei der untere Abschnitt der Seitenwand (2) der Kapsel im Wesentlichen vertikal ist.

7. Kapsel gemäß einem der vorhergehenden Ansprüche, wobei der Dichtungsvorsprung sich sowohl von der Oberseite als auch von einer Unterseite des flanschartigen Randes (6) erstreckt.

8. Getränkezubereitungssystem, umfassend eine Kapsel (1) gemäß einem der vorhergehenden Ansprüche und eine Brühvorrichtung mit einem Behälter (50) zum Umschließen wenigstens eines Teils der Kapsel, wobei der Behälter (50) eine untere Kante aufweist (50a), die mit dem im Wesentlichen dreieckigen Abschnitt des Dichtungsvorsprungs (10) in Kontakt tritt, um während der Getränkezubereitung einen dichtenden Eingriff mit der Kapsel (1) bereitzustellen.

9. Getränkezubereitungssystem gemäß Anspruch 8, wobei das Verhältnis zwischen der Basis (24) des dreieckigen Abschnitts des Dichtungsvorsprungs (10), gemessen an der oberen Fläche (6a) des flanschartigen Randes (6), und der Breite (W) der Unterkante (50a) des Behälters (50) im Bereich von 0,8 bis 3,0 liegt, vorzugsweise im Bereich von 1,0 bis 2,3, und am meisten bevorzugt im Bereich von 1,2 bis 1,8.

10. Getränkezubereitungssystem gemäß Anspruch 8 oder 9, wobei der Auftreffpunkt (B) der geraden Linien, auf denen die beiden Seiten (11, 12) liegen, in die Projektion der Breite (W) der Unterkante (50a) des Behälters (50) fällt, welche dazu bestimmt ist, zur Bereitstellung eines abdichtenden Eingriffs mit der Kapsel (1) mindestens einen Teil der zwei Seiten (11, 12) zu kontaktieren.

11. Getränkezubereitungssystem gemäß einem der Ansprüche 8 bis 10, wobei die Unterkante (50a) im Gebrauch einen Teil der Innenseite (11) und einen Teil der Außenseite (12) des dreieckigen Dichtungsvorsprungs (10) zusammenpresst.

12. Getränkezubereitungssystem gemäß einem der Ansprüche 8 bis 11, wobei die Unterkante (50a) mit Vertiefungen oder Lücken bereitgestellt ist.

13. Getränkezubereitungssystem gemäß einem der Ansprüche 8 bis 12, wobei die Unterkante (50a) und der Dichtungsvorsprung im Wesentlichen koaxiale Umkreise sind.

14. Verfahren zur Herstellung eines Getränks in einem Getränkesystem nach einem der Ansprüche 8 bis 13, **dadurch gekennzeichnet, dass** die Unterkante des Behälters (50) in einen Kontakt mit dem Teil der Innenseite (11) und einem Teil der Außenseite (12) des dreieckigen Dichtungsvorsprungs (10) gedrückt wird, um während der Getränkezubereitung einen abdichtenden Eingriff mit der Kapsel (1) bereitzustellen.

## Revendications

1. Capsule (1) pour la préparation d'une boisson à partir d'un dispositif d'infusion qui comprend un récipient (50) destiné à renfermer au moins une partie de ladite capsule, ladite capsule comprenant une paroi latérale (2), une paroi, d'admission, supérieure (3) et une paroi, de sortie, inférieure (4) formant un corps creux (5) dans lequel un produit est contenu, un rebord en forme de bride (6) s'étendant latéralement à partir de ladite capsule, au moins une saillie d'étanchéité (10) située sur une surface supérieure (6a) dudit rebord en forme de bride pour établir une mise en prise d'étanchéité avec ledit récipient (50) lorsqu'elle est utilisée dans ledit dispositif d'infusion, ledit corps de capsule étant sensiblement tronconique et ayant un axe vertical central (A),
ladite saillie d'étanchéité comprenant
une partie ayant une coupe transversale sensiblement triangulaire avec deux côtés (11, 12) situés sur deux lignes droites qui s'étendent depuis ladite surface supérieure (6a) du rebord en forme de bride (6), et entrecoupent celle-ci, et sont incidentes l'une et l'autre en un point (B) pour définir un angle (α), ledit point d'incidence (B) ayant une hauteur (H), dans laquelle, dans une vue en coupe radiale, ladite hauteur (H) est la distance verticale dudit point d'incidence (B) mesurée à partir de la surface supérieure (6a) dudit rebord en forme de bride (6) ; dans laquelle l'un desdits deux côtés (11, 12) fait saillie depuis le point de contact de la paroi latérale (2) de la capsule avec la surface supérieure (6a) dudit rebord en forme de bride (6), dans laquelle le point d'incidence (B), dans une vue en coupe radiale par rapport à l'axe vertical central (A) de la capsule, forme une circonférence ayant son centre appartenant audit axe central (A), ladite capsule étant **caractérisée en ce que** :
ledit angle (α) est compris dans la plage de 45 °-120 ° ;
ladite hauteur (H) est supérieure à 0,5 mm et de préférence dans la plage de 0,6 mm à 2,6 mm ;
ladite hauteur (H) correspond à la ligne bissectrice dudit angle (α).

2. Capsule selon la revendication 1, dans laquelle ledit angle (α) est compris dans la plage de 53 ° à 80 °, de préférence de 55 ° à 65 ° et de manière la plus préférée de 60 °.

3. Capsule selon la revendication 1 ou 2, dans laquelle ladite hauteur (H) est comprise dans la plage de 0,6 à 2,0 mm, de préférence de 0,8 à 1,5 mm.

4. Capsule selon l'une quelconque des revendications précédentes, dans laquelle ledit triangle est un triangle équilatéral.

5. Capsule selon l'une quelconque des revendications précédentes, dans laquelle lesdits au moins deux côtés (11, 12) sont reliés l'un à l'autre au moyen d'une ligne arrondie, et/ou d'une ligne droite, et/ou de deux ou plus de deux segments inclinés.

6. Capsule selon l'une quelconque des revendications précédentes, dans laquelle la partie inférieure de la paroi latérale (2) de la capsule est sensiblement verticale.

7. Capsule selon l'une quelconque des revendications précédentes, dans laquelle ladite saillie d'étanchéité s'étend à la fois depuis le côté supérieur et un côté inférieur dudit rebord en forme de bride (6).

8. Système de préparation de boisson, comprenant une capsule (1) selon l'une quelconque des revendications précédentes, et un dispositif d'infusion incluant un récipient (50) pour renfermer au moins une partie de ladite capsule, dans lequel ledit récipient (50) ayant un bord inférieur (50a) qui entre en contact avec ladite partie sensiblement triangulaire de ladite saillie d'étanchéité (10), pour établir une mise en prise étanche avec la capsule (1) pendant ladite préparation de boisson.

9. Système de préparation de boisson selon la revendication 8, dans lequel le rapport entre la base (24) de ladite partie triangulaire de la saillie d'étanchéité (10) mesurée sur ladite surface supérieure (6a) du rebord en forme de bride (6) et la largeur (W) du bord inférieur (50a) dudit récipient (50) est compris dans la plage de 0,8-3,0 et de préférence dans la plage de 1,0-2,3, de manière la plus préférée dans la plage de 1,2-1,8.

10. Système de préparation de boisson selon la revendication 8 ou 9, dans lequel ledit point d'incidence (B) desdites lignes droites sur lesquelles se trouvent lesdits deux côtés (11, 12) tombe à l'intérieur de la projection de la largeur (W) du bord inférieur (50a) dudit récipient (50), qui est destiné à entrer en contact avec au moins une partie desdits deux côtés (11, 12) afin d'établir une mise en prise étanche avec la capsule (1).

11. Système de préparation de boisson selon l'une quelconque des revendications 8 à 10, dans lequel, lorsqu'il est utilisé, ledit bord inférieur (50a) comprime une partie dudit côté intérieur (11) et une partie dudit côté extérieur (12) de ladite saillie d'étanchéité triangulaire (10).

12. Système de préparation de boisson selon l'une quelconque des revendications 8 à 11, dans lequel ledit bord inférieur (50a) est muni d'indentations ou d'espaces.

13. Système de préparation de boisson selon l'une quelconque des revendications 8 ou 12, dans lequel ledit bord inférieur (50a) et ladite saillie d'étanchéité sont des circonférences sensiblement coaxiales.

14. Procédé de préparation d'une boisson dans un système de boisson selon l'une quelconque des revendications 8 à 13, **caractérisé en ce que** ledit bord inférieur dudit récipient (50) est comprimé en contact avec ladite partie dudit côté intérieur (11) et une partie dudit côté extérieur (12) de ladite saillie d'étanchéité triangulaire (10), pour établir une mise en prise étanche avec la capsule (1) pendant ladite préparation de boisson.
